# EUROPEAN PATENT APPLICATION

(11) **EP 3 878 926 A1**
(43) Date of publication of application: **15.09.2021**
(21) Application number: 21161406.0
(22) Date of filing: 09.03.2021
(51) Int. Cl.: C10G 11/18, C10G 1/10, B29B 17/04, B29K 23/00

(54) **SUSPENSION OF A WASTE PLASTIC AND A VACUUM GAS OIL, ITS PREPARATION AND USE IN FCC**

(30) Priority: 09.03.2020 NL 2025083; 03.12.2020 NL 2027029
(71) Applicant: Cramwinckel, Michiel, 2271 BK Voorburg (NL)
(72) Inventor: Cramwinckel, Michiel, 2271 BK Voorburg (NL)
(74) Representative: van Wijk, Alexander Pieter

(57) **Abstract**

The invention is directed to a suspension of a vacuum gas oil and between 1 and 15 wt% of a powder of plastic particles comprising particles obtainable by cryogenic milling of waste polyethylene and/or waste polypropylene and having a size of smaller than 500 micron and to the use of such a suspension as a feedstock in a fluidized catalytic cracking process.

## Description

The invention is directed to a suspension of a waste plastic and a vacuum gas oil and its use as feedstock in a fluidised catalytic cracking (FCC) process.

US2018/0371326 describes a process wherein a mixture of different waste thermoplastic polymer products is contacted with an equilibrated FCC cracking catalyst at 425 °C to obtain a gas and gasoline, kerosene, gas oil and heavier liquid hydrocarbon products. According to the publication the waste plastic feedstock has a particle size of between 10-50 mm.

US2014/0228204 describes a process wherein a HDPE plastic feed having a particle size of 200 micron (0.2 mm) is contacted with a FCC spent catalyst and a ZSM-5 based catalyst at 650 °C in a fluidized bed. The C5+ liquid yield was 44.2 wt%, the gas yield (H2, C1-C4) was 54.1 wt% and the coke yield was 1.7 wt%. The propylene yield was 19.8 wt%.

US2018/0371325 describes a process wherein plastic particles are catalytically cracked. The plastic particles may be fed to the cracking reactor of a FCC process in admixture with liquid fuels obtained in the cracking process having a boiling range of between 25 and 250 C. The liquid fuel diluent is generally used at a ratio of 0.5 to 5 kg per kg of plastic particles. This would translate to a content of between 16 and 60 wt% plastic particles in the suspension. A disadvantage of this process is that the plastic particles have to be added to a recycle stream of the FCC process in a high content which introduces handling issues. Further the solid plastic particles and the high content of solid particles in the slurry will result in a feed which cannot easily be provided to a distribution nozzle at the bottom of a typical FCC entrained flow riser.

Elena Rodríguez, et al., Co-cracking of high-density polyethylene (HDPE) and vacuum gasoil (VGO) under refinery conditions, Chemical Engineering Journal, Elsevier, 15 February 2020 describes a study where 4 mm pellets of HDPE are blended as a melt into VGO before subjecting this blend to a catalytic cracking process.

The results of US2014/0228204 show that propylene may be obtained under catalytic cracking conditions when starting from a HDPE plastic feed using a ZSM-5 catalyst. A problem is that such a process cannot be easily performed at a large scale. Further a special reactor would have to be developed.

The object of the present invention is to provide a FCC feedstock which has the potential to yield olefins and which can be used under practical refinery conditions as a refinery feedstock.

This object is achieved by the following suspension. Suspension comprising of a vacuum gas oil and between 1 and 15 wt% of a powder of plastic particles comprising particles obtainable by cryogenic milling of waste polyethylene and/or waste polypropylene and having a size of smaller than 500 micron.

Applicants found that this suspension can be stored and transported without substantial sedimentation of the plastic particles. This allows one to prepare the suspension at the location where waste polyethylene and/or waste polypropylene and optionally other waste plastics are cryogenically milled. A further advantage of cryogenic milling waste plastics is that the resulting powder may be easily mixed such that over time a substantially constant quality of powder may be mixed with the vacuum gas oil (VGO). This is advantageous for obvious FCC operational reasons when the suspension is used as feedstock for a FCC process. The suspension may be stored and transported by pipeline or carriers to a refinery. Further this suspension can be directly fed to an existing FCC process without having to adapt such a process in any substantial manner. For example no special blending operation is required which involves the melting of the plastic. The small plastic particles in the suspension will almost immediately melt and start to thermo-catalytically decompose when the suspension is contacted with hot FCC catalyst within a cracking reactor.

The vacuum gas oil (VGO) as part of the suspension may be any distillate fraction obtained when distilling under vacuum the distillation residue of an atmospheric distillation of a crude petroleum feedstock. By distillate fraction is meant any fraction not being the residue or bottom product of the vacuum distillation. A suitable VGO has a API gravity of between 19 and 23 according to ASTM D4052, an initial boiling point between 255 and 300 °C, a 10% boiling point of between 343 and 393 °C, a 50% boiling point of between 438 and 465 °C, a 90 % boiling point of between 500 and 560 °C and a final boiling point of between 527 and 582 °C according to ASTM D1160.

The content of plastic particles in the suspension is between 1 and 15 wt% and preferably between 1 and 10 wt.%. An exemplary content of plastic particles may be 5 wt.%. The liquid component of the suspension may consist of more than 80 wt% of vacuum gas oil and preferably of substantially only vacuum gas oil.

Cryogenic milling is known and for example described in US4406411, US4483488, US3885744, WO2005/068920 and US5203511. The milling itself may be performed in a grinding mill in the presence of a coolant. The coolant is preferably a liquid gas, more preferably an inert liquid gas. The liquid gas may be a liquid permanent gas such as helium, hydrogen, neon, nitrogen, oxygen and normal air. Preferably liquid air and more preferably liquid nitrogen is used as a coolant. The temperature at which the milling takes place is suitably at the boiling temperature of the liquid gas or at a temperature which is arrived at due to boiling of a cryogenic liquid. The temperature is suitably well below the glass transition temperature of the plastic to be milled. The milling temperature is suitably below 0 °C, preferably below minus 50 °C and more preferably below minus 150 °C (- 150 °C) and most preferably below minus 180 (-180 °C).

The milling suitably results in a powder of the waste plastic feedstock having a dimension of smaller than 500 micron relating to a 35 mesh screen, preferably smaller than 300 micron relating to a 50 mesh screen.

The cryogenic milling may be performed using liquid nitrogen using the cooling and grinding technology called PolarFit® Cryogenic Reduction Solutions as offered by Air Products. In such a process the liquid nitrogen may be added directly to the mill chamber of the grinding mill. The liquid gas may also be provided to a conveyor, like a screw conveyor, where the waste polymer product is cooled to its desired low temperature before it enters the mill chamber as for example described in US3771729. For larger shaped waste plastic feedstock it may be desirable to contact the waste plastic feedstock in a so-called tunnel freezer as for example described in US4175396.

Liquid nitrogen is the preferred liquid gas to cool the waste polymer product because it may be easily made in large quantities and because it is inert. Liquid nitrogen is preferably prepared in an air separation process which also prepares an oxygen containing gas which may be advantageously used in the regeneration of the cracking catalyst as will be described below. This optimises the use of the air separation process and especially the use of the liquid nitrogen and the oxygen containing gas as obtained in such a process. The liquid nitrogen will evaporate thereby effectively cooling the waste plastic feedstock. The oxygen produced in such a process may be obtained in a purity suited for use in the catalyst regeneration. The used gaseous nitrogen may be returned to the air separation process to be liquified and reused in the cryogenic milling.

The air separation process is preferably based on the commonly used and most well-known air separation process for oxygen and nitrogen production. This process is based on the Linde double column cycle invented In the first half of the 20th century. The basic concept of the Linde double column cycle is to have thermal communication between the top of the higher pressure column and the bottom of the lower pressure column to condense the vapor nitrogen from the higher pressure column and reboil the liquid oxygen in the bottom of the lower pressure column. In this process air is compressed, suitably by means of a compressor, thereby adding energy to the gas required to run the process. Various air separation processes have been designed based on this principle depending on the desired products. Preferably the air separation process produces liquid nitrogen for use in the cryogenic milling and gaseous and/or liquid oxygen for use in the catalyst regeneration described below. The oxygen may be prepared as liquid oxygen to simplify storage and/or may be obtained as gaseous oxygen for direct use in the catalyst regeneration.

In a preferred embodiment the air separation process is integrated with a liquified natural gas (LNG) regas plant. In this way one or more nitrogen rich gas streams of the air separation plant may be reduced in temperature and/or liquified by indirect heat exchange with the evaporating liquid natural gas of the regas plant as for example described in WO03/041931, US5137558, US5139547, US5141543, US2008216512, US2008000266, US2009100863 and EP2669613. Preferably the pressure of the nitrogen rich gas streams is higher than the LNG pressure such that in case of leakage no natural gas will contaminate the nitrogen rich streams. The air separation plant preferably produces both liquid nitrogen and liquid oxygen. This is especially favourable for LNG regas plants which have the function to diversify supply of methane gas to the natural gas grid as an alternative for pipeline gas. Such a regas plant may not continuously prepare the required nitrogen and/or oxygen products while the downstream processes like the cryogenic milling or the partial combustion processes may require a constant flow of these products. By storing a buffer volume of liquid nitrogen and optionally liquid oxygen the desired constant flow may be achieved while the LNG regas plant may temporarily produce at a low production rate.

Alternatively the air separation process is a Pressure Swing Adsorption process wherein zeolite molecular sieves extract oxygen from air. Oxygen at 95% is delivered, while the nitrogen may be liquified to prepare liquid nitrogen.

One of the advantages of the present process is that waste plastic feedstock originating from different sources may be cryogenically milled without having to perform substantial pre-treatment of the waste plastic feedstock, such as separation into different fractions per polymer type. This allows one to cryogenically mill different waste plastic feedstocks having varying compositions in time. This results in powders of waste plastic feedstocks having different compositions. Preferably these powders are homogenised to obtain a powder of the waste plastic feedstock having a substantially constant performance in the catalytic cracking process.

Homogenisation may be simply performed in the storage vessels for the powder by mixing the content of the vessel. For example the powder obtained in at least a 2 hour period may be homogenised, preferably the powder obtained in at least a 12 hour period may be homogenised, more preferably the powder obtained in at least a 24 hour period may be homogenised, even more preferably the powder obtained in at least a 60 hour period may be homogenised and most preferably the powder obtained in at least a 120 hour period may be homogenised. The preferred time period may also depend on the variation in time of the composition of the waste plastic products to be milled and the available mixing vessels. Homogenisation may also be performed by mixing powders obtained from different cryogenic milling processes using different waste plastic products as starting material.

The homogenisation is preferably performed to achieve a powder having an atomic carbon content, an atomic hydrogen content and optionally an atomic oxygen content and atomic nitrogen content which contents vary in time for less than 20%, more preferably less than 10% and even more preferably less than 5%. Preferably a continuously operated cracking process is used wherein the powder of the waste plastic feedstock as fed to the process varies in time less than 20%, more preferably less than 10% and even more preferably less than 5% with respect to the atomic carbon content, an atomic hydrogen content and optionally an atomic oxygen content and optionally an atomic nitrogen content in case oxygen and/or nitrogen based plastic feedstock is present.

The powder of plastic particles of the suspension will comprise of waste polyethylene and/or waste polypropylene. Preferably the cryogenic milling will be performed on a mixture of waste plastic products which may further comprise PS (Polystyrene); PVC (Polyvinyl chloride); PET (Polyethylene terephthalate); PUT (Polyurethanes) and PP&A fibres (Polyphthalamide fibres), PVC (polyvinylchloride), polyvinylidene chloride, PU (polyurethane), ABS (acrylonitrile-butadiene-styrene), nylon, aramid and fluorinated polymers.

Preferably the powder of plastic particles are substantially only hydrocarbons consisting of only carbon, hydrogen and optionally oxygen. This avoids the formation of nitrogen based combustion gasses and chlorine gasses when PVC is present. Small amounts of these other polymers may be present as contaminants. Preferably cryogenic milling is performed on a mixture of different waste polymer products at least comprising polyethylene and polypropylene and further also comprising any one or both of the following list of polymers consisting PS (Polystyrene) and PET (Polyethylene terephthalate). Preferably the powder of the waste plastic feedstock comprise for more than 50 wt%, more preferably for more than 70 wt%, even more preferably for more than 80 wt% and even more preferably for more than 95 wt% of the listed polymers above.

Other plastics, such as polyvinylchloride (PVC), polyvinylidene chloride, polyurethane (PU), acrylonitrile-butadiene-styrene (ABS), nylon, aramid and fluorinated polymers are less desirable. The mix of plastic particles in the suspension suitably comprise less than 50% by weight, preferably less than 30 wt.%, more preferably less than 20 wt.%, even more preferably less than 10 wt.% of these listed less desirable polymers.

Chlorine and fluorinated plastics are preferably not part of the waste plastic feedstock. The higher density chlorine and fluorinated plastics, such as PVC and fluorinated ethylene propylene may be separated from the lower density LDPE (Low-density polyethylene), HDPE (High-density polyethylene); PP (Polypropylene) and PS (Polystyrene) type polymers by making use of their difference in density. Suitably the chlorine and fluorinated plastics, such as PVC and fluorinated ethylene propylene are separated from a mixture of waste polymers products by means of flotation in a suitable liquid, preferably water. A suitable waste plastic feedstock may therefore be the floating plastic waste as collected in rivers and/or oceans.

An example of a suitable waste polymer products is the so-called Non-Recycled Plastic (NRP). The mixture of waste polyethylene and/or waste polypropylene may also be the so-called DKR 350 which comprise PE, eg LDPE and HDPE, PP, PS and PET, less than 10 wt% impurities, wherein the impurities contribute to at most 5 wt% paper and cardboard, at most 2 wt% metals, at most 4 wt% PET bottles, at most 0.5 wt% PVC and at most 3 wt% of a mixture which consists of glass, composite paper and cardboard, for example beverage cartons, rubber, stones, wood, textiles, nappies and/or compostable waste. A next example is so-called plastic waste from mechanical plastic recycling processes. Such mixtures may consist for the majority of PP and PE.

The powder of the waste plastics particles may contain other components such as paper, glass, stone, soil, meat, biomass, like food and metals. Metals, such as iron and titanium, may be present as additives in the waste plastic feedstock itself. These materials may be present in small amounts and will either decompose in gaseous products and ash as in the case of paper, meat and biomass or become part of the catalyst inventory or even deposit on the catalyst particles. Such compounds will be discharged from the FCC process when used catalyst are purged as spent cracking catalysts. Preferably metals such as iron and especially titanium are recovered from the spent catalyst. This is an advantage of the present process which does not require that the waste polymer products are clean and/or are sorted into different polymer types. This allows that mixtures of multi-layered films, metallised polymer films, polystyrene food packaging, dark coloured polymers, biobased polymers, plastic cups, plates and cutlery and the plastic of plastic layered tetra paks or even the tertra paks themselves.

Some of the above listed other components may be separated from the powder of the waste plastic particles prior to mixing the powder with the VGO. This is especially advantageous when the content of such other compounds is high and/or when such compounds are easily separated. For example powders of iron, nickel, cobalt and their alloys may be separated from the powder by use of a magnet.

The suspension according to this invention may be used to prepare a synthesis gas by gasification of the suspension. For such a gasification it may be advantageous to use an oxygen enriched gas as obtained in the same air separation process which prepares the liquid nitrogen used in the cryogenic milling.

The invention is also directed to the use of the suspension according to this invention as a feedstock in a fluidized catalytic cracking process. The fluidized catalytic cracking process is suitably performed by contacting the suspension with a suitable cracking catalyst at a temperature of between 550 and 750 °C. In addition to the suspension FCC recycle streams such as light and/or heavy cycle oil may be co-processed with the suspension in the fluidized catalytic cracking process. The catalyst to oil ratio may be the same as in conventional FCC processes wherein the weight of the plastic particles is counted as oil. For example the catalyst to oil mass ratio may range from 5 to 8. Preferably the cracking catalyst is a fluidized catalytic cracking (FCC) catalyst. The FCC catalyst is comprised of at least one of a X-type zeolite, a Y-type zeolite, a USY-zeolite, mordenite, Faujasite, nano-crystalline zeolites, MCM mesoporous materials, SBA-15, a silica-alumino phosphate, a gallophosphate and a titanophosphate. Preferably the FCC catalyst is comprised of at least one of a Y-type zeolite and a USY-zeolite.

Preferably a medium pore size zeolite is present when contacting the suspension with a fluidized catalytic cracking (FCC) catalyst while performing the catalytic cracking. The medium pore size zeolites generally have a pore size from about 0.5 nm, to about 0.7 nm and include, for example, MFI, MFS, MEL, MTW, EUO, MTT, HEU, FER, and TON structure type zeolites (IUPAC Commission of Zeolite Nomenclature). Non-limiting examples of such medium pore size zeolites, include ZSM-5, ZSM-12, ZSM-22, ZSM-23, ZSM-34, ZSM-35, ZSM-38, ZSM-48, ZSM-50, silicalite and silicalite 2. One suitable zeolite is ZSM-5. These catalyst additives are known to improve the selectivity to lower olefins, such as ethylene and especially propylene. This is advantageous because ethylene and propylene are the monomers of a large part of the polymers present in the waste polymer products.

Preferably a ZSM-5 additive is used to improve the olefin yield. The amount of ZSM-5 zeolite catalyst in the total of the catalyst inventory may be from 10 to 50 wt and preferably from 30 to 45 wt.% and wherein the catalyst inventory is the total of FCC catalyst and ZSM-5.

The cracking catalyst and the medium pore size zeolite described above may have a size ranging in diameter between 40 and 80 microns.

The process may be performed in any possible known FCC reactor configuration. Typical reactors are entrained flow riser reactors. At the lower end a nozzle may be present to supply the suspension as fine droplets into a flow of hot FCC catalyst. The cracked products comprise of cracked gas, including the lower olefins, cracked gasoline and a higher boiling fraction.

At the catalytic cracking conditions coke will be formed. The coke is suitably removed from the process by combustion in a separate fluidized bed regenerator. Combustion is preferably performed by contacting the coke particles and the coke deposited on the cracking catalyst with an oxygen comprising gas whereby the coke is combusted to carbon dioxide. Suitably part of the catalyst present in the fluidised bed reactor and any coke is continuously sent to the fluidised bed regenerator. In the fluidised bed regenerator coke is combusted and wherein part of the catalyst as present in the fluidised bed regenerator is sent to the fluidised bed reactor as regenerated catalyst. The temperature in the fluidised bed regenerator is generally between 620 and 760 °C and preferably between 680 and 720 °C. The residence time of the cracking catalyst in the fluidised bed regenerator may be between 1 and 6 minutes. The fluidized bed regenerator may be provided with additional cooling means. This may be required when relatively more coke is formed due to the presence of the plastic in the suspension. The cooling means may be conduits present in the fluidised bed through which water flows and where steam is produced. This steam may be used to generate rotational power which in turn may be used to generate electricity. The rotational energy and/or electricity may be used to drive the compressor of the air separation unit directly or indirectly.

In such a process fresh catalyst may be added and used catalyst is purged from the process. The gaseous effluent as obtained when catalytically cracking the suspension is preferably passed through one or more cyclone separators to remove fines.

The invention is also directed to a process to prepare hydrocarbon compounds from a waste plastic feedstock comprising the following steps,
(a) cryogenic milling of the waste plastic feedstock comprising polyethylene and/or polypropylene to a powder of the waste plastic feedstock having a size less than 500 micron,
(b) blending the powder of the waste plastic feedstock with a vacuum gas oil to obtain a suspension of the vacuum gas oil and between 1 and 15 wt% of the powder of plastic feedstock,
(c) catalytically cracking the suspension obtained in step (b) by contacting the suspension with a fluidized catalytic cracking (FCC) catalyst at a temperature of between 550 and 750 °C in a fluidised bed reactor wherein also coke is formed,
(d) combustion of the coke formed in step (b) in a fluidised bed regenerator in the presence of part of the FCC catalyst of step (b) using an oxygen comprising gas thereby obtaining regenerated FCC catalyst.

Steps (a) and (b) may be performed at a distant location from where steps (c) and (d) are performed.

The cryogenic milling in step (a) may be as described above. The catalytic cracking in step (c) and regeneration of step (d) may be as described above. An advantage of performing step (a) in combination with steps (c) and (d) is when liquid nitrogen is used in step (a) and wherein the combustion in step (d) is performed with an oxygen enriched gas stream.

Preferably the regeneration is performed by combustion of the coke making use of an oxygen comprising gas enriched in oxygen as obtained in the same air separation process which also produces the liquid nitrogen. Such an oxygen enriched gas having may have an oxygen content of more than 80 vol.%, suitably has an oxygen content of more than 90 vol.%, preferably more than 95 vol.% and even more preferably more than 99 vol.%. Such an oxygen enriched gas is preferably diluted with a carbon dioxide comprising recycle gas. Preferably the nitrogen content in the resulting gas as used in step (d) is below 5 vol.%. The flue gas as formed in step (d) will contain almost no nitrogen and may be comprised of mainly water and carbon dioxide. After separating the water from the flue gas the obtained dried carbon dioxide may be stored, optionally after liquification, preferably permanently stored in a carbon capture and storage (CCS) set-up. Part of the carbon dioxide is recycled as diluent for the oxygen enriched gas. This recycle may be the water containing carbon dioxide and/or the dried carbon dioxide.

The carbon dioxide may be liquified by cooling and compression. Liquification can also be performed in a condensation step by indirect heat exchange using a cryogenic gas, preferably nitrogen, used in step (a) as a cooling medium. Alternatively a low temperature gas directly obtained from the air separation unit may be used.

## Claims

1. Suspension comprising of a vacuum gas oil and between 1 and 15 wt% of a powder of plastic particles comprising particles obtainable by cryogenic milling of waste polyethylene and/or waste polypropylene and having a size of smaller than 500 micron.

2. Suspension according to claim 1, wherein the particles have a size of smaller than 300 micron.

3. Process to make a suspension according to any one of claims 1-2, wherein waste polyethylene and/or waste polypropylene optionally in admixture with other waste plastics are cryogenically milled to plastic particles having a size of smaller than 500 micron and mixing the obtained particles with a vacuum gas oil to obtain the suspension.

4. Process according to claim 3, wherein the vacuum gas oil has a API gravity of between 19 and 23 according to ASTM D4052, an initial boiling point between 255 and 300 °C, a 10% boiling point of between 343 and 393 °C, a 50% boiling point of between 438 and 465 °C, a 90 % boiling point of between 500 and 560 °C and a final boiling point of between 527 and 582 °C according to ASTM D1160.

5. Process according to any one of claims 3-4, wherein the waste polyethylene and/or waste polypropylene is cryogenically milled in admixture with other waste plastics and having a varying composition in time and wherein the plastic particles as obtained in at least a 2 hour period are homogenised by mixing.

6. Process according to any one of claims 3-5, wherein the mixture of waste polyethylene and/or waste polypropylene comprises less than 10 wt% impurities, wherein the impurities contribute to at most 5 wt% paper and cardboard, at most 2 wt% metals, at most 4 wt% PET bottles, at most 0.5 wt% PVC and at most 3 wt% of a mixture which consists of glass, composite paper and cardboard, rubber, stones, wood, textiles, nappies and/or compostable waste.

7. Process according to any one of claims 3-6, wherein the suspension comprises more than 80 wt% of the vacuum gas oil and between 1 and 10 wt% of the plastic particles.

8. Use of the suspension of claims 1 or 2 or the suspension obtainable by the process of any one of claims 3-7 as a feedstock in a fluidized catalytic cracking process.

9. Process to catalytically crack the suspension of claims 1 or 2 or the suspension obtainable by the process of any one of claims 3-7 by contacting the suspension with a fluidized catalytic cracking (FCC) catalyst at a temperature of between 550 and 750 °C.

10. Process according to claim 9, wherein the catalytic cracking is performed in a entrained flow riser reactor.

11. Process according to any one of claims 9-10, wherein the FCC catalyst comprises a Y-type zeolite and/or a USY-zeolite.

12. Process according to any one of claims 9-11, wherein the suspension is also contacted with a medium pore size zeolite wherein part of the suspension is converted to ethylene and propylene.

13. Process according to claim 12, wherein the medium pore size zeolite is ZSM-5.

14. Process to prepare hydrocarbon compounds from a waste plastic feedstock comprising the following steps,
(a) cryogenic milling of the waste plastic feedstock comprising polyethylene and/or polypropylene to a powder of the waste plastic feedstock having a size less than 500 micron,
(b) blending the powder of the waste plastic feedstock with a vacuum gas oil to obtain a suspension of the vacuum gas oil and between 1 and 15 wt% of the powder of plastic feedstock,
(c) catalytically cracking the suspension obtained in step (b) by contacting the suspension with a fluidized catalytic cracking (FCC) catalyst at a temperature of between 550 and 750 °C in a fluidised bed reactor wherein also coke is formed,
(d) combustion of the coke formed in step (b) in a fluidised bed regenerator in the presence of part of the FCC catalyst of step (b) using an oxygen comprising gas thereby obtaining regenerated FCC catalyst and a flue gas.

15. Process according to claim 14, wherein in step (a) liquid nitrogen is used and in step (d) an oxygen comprising gas enriched in oxygen is used, wherein the liquid nitrogen and the oxygen comprising gas is obtained in the same air separation process and wherein carbon dioxide is separated from the flue gas and permanently stored in a carbon capture and storage (CCS) set-up.
